Europäisches Patentamt

European Patent Office

Office européen des brevets

(11) Veröffentlichungsnummer: **0 437 283 A1**

## (12) EUROPÄISCHE PATENTANMELDUNG

(21) Anmeldenummer: 91101942.0

(22) Anmeldetag: 13.12.86

(51) Int. Cl.5: **B60J 7/043**, B60J 7/057,
F16H 19/00

This application was filed on 12 - 02 - 1991 as a divisional application to the application mentioned under INID code 60.

(30) Priorität: 19.12.85 DE 3544941
19.12.85 DE 3544940

(43) Veröffentlichungstag der Anmeldung:
17.07.91 Patentblatt 91/29

(60) Veröffentlichungsnummer der früheren Anmeldung nach Art. 76 EPÜ: 0 313 099

(84) Benannte Vertragsstaaten:
DE FR GB IT

(71) Anmelder: **Farmont Produktion GmbH & Co. KG**
**Willstätter Strasse 6**
**W-4000 Düsseldorf 11(DE)**

(72) Erfinder: **Dr. Farmont, Rolf**
**Hortensienstrasse 17**
**4000 Düsseldorf 30(DE)**

(74) Vertreter: **Palgen, Peter, Dr. Dipl.-Phys.**
**Patentanwälte Dipl.-Phys. Dr. Peter Palgen &**
**Dipl.-Phys. Dr. H. Schumacher**
**Frühlingstrasse 43A (Ecke Holunderweg)**
**W-4300 Essen 1(DE)**

(54) **Fahrzeugschiebedach.**

(57) Bei einem Schiebedach, zumindest bestehend aus einer Platte (13) mit einer Vorderkante und einer Hinterkante, einer Öffnung im Fahrzeugdach, einer Führungsschiene, mindestens einem Höhenverstellorgan und einem Betätigungsorgan, bei dem die Platte (13) in einer ersten Stellung die Öffnung (1) im Fahrzeugdach (2) verschließt, mittels des Höhenverstellorganes höhenverstellbar ist, oberhalb oder unterhalb der Dachöffnung (1) in verschiedene Stellungen auf einer Seite des Fahrzeugdaches (2) verschiebbar ist, in Längsrichtung (A) des Fahrzeuges entlang der Führungsschiene vor- und zurückbewegbar ist und mittels mindestens einen Betätigungsorganes zumindestens verschiebbar ist, wird ein vergleichsweise weites und schnelles Verschieben der Platte dadurch erreicht, daß zwischen der Platte (13) einerseits und dem Fahrzeugdach (2), insbesondere einer Vorder- und Hinterstütze (16 und 17) andererseits ein Übersetzungsgetriebe (73) angeordnet ist. Dieses Übersetzungsgetriebe weist vorzugsweise ein, insbesondere von der Vorderstütze (16) in Verschieberichtung (A) der Platte (13) vor- und zurückbewegbares Antriebsrad (73B) auf, welches auf einer bezüglich des Fahrzeugdaches (2) insbesondere ortsfest, festlegbaren oder festgelegten ersten Schiene (73A) einerseits und einer mit der Platte (13) festverbindbaren oder verbundenen zweiten Schiene (73C) andererseits abrollbar ist.

Fig. 2 a

# FAHRZEUGSCHIEBEDACH

Die Erfindung betrifft ein Fahrzeugschiebedach mit den Merkmalen des Oberbegriffs von Patentanspruch 1.

Ein derartiges Schiebedach, dessen verschließbare Platte sowohl unterhalb, insbesondere aber oberhalb des Fahrzeugdaches verschiebbar ist, ist aus der DE - A - 34 04 541 bekannt. Bei diesem bekannten Fahrzeugschiebedach werden sowohl die Vorder- als auch die Hinterstütze der verschiebbaren Platte in Fahrzeuglängsrichtung verschoben, und zwar erfolgen diese beiden Verschiebungen unterschiedlich schnell, so daß die verschiebbare Platte stets gleichzeitig verschoben und hinten angehoben wird.

Ferner ist aus der DE -A- 31 24 325 ein weiteres Fahrzeugschiebedach bekannt, bei dem die Hinterstütze ortsfest montiert ist und das Höhenverstellorgan aus einem schwenkbaren Hebel besteht, der in Längsschlitzen einer plattenseitig montierten Schiene, in die ein Zapfen eingreift, verschiebbar ist.

Die bekannten Fahrzeugschiebedächer haben unter anderem den Nachteil, sich etwa nur zu 2/3 der Dachöffnungsfläche öffnen zu lassen. Vor allem bei per Hand betriebenen Antriebsspindeln dauert das Öffnen und Schließen der Platte relativ lange.

Davon ausgehend liegt der Erfindung die **Aufgabe** zugrunde, unter möglichst weitgehender Meidung vorerwähnter Nachteile bei einem gattungsgemäßem Fahrzeugschiebedach den Nutzungskomfort zu verbessern. Insbesondere ist es erwünscht, mit einfachen Mitteln eine präzise Führung der Platte sowie ein vorteilhafter Bewegungsablauf der Platte ohne besondere Konzentrationsanforderung an die Bedienperson zu erreichen.

Diese Aufgabe wird durch ein Fahrzeugschiebedach mit den Merkmalen des Anspruchs 1 gelöst. Bei einer bevorzugten Ausführungsform der Erfindung ist die Führungsschiene eine das Betätigungsorgan bildende Antriebsspindel, insbesondere mit außenliegendem Schneckengewinde. Grundsätzlich kann das Verschieben der Platte aber auch mit einem Bowdenzug oder dgl. vorgenommen werden. Bevorzugt übernimmt aber die schwenkbare Führungsschiene eine Doppelfunktion, nämlich die Trag- und Führungsfunktion einerseits sowie die Antriebsfunktion andererseits. Höhenverstellorgane können in beiden Endbereichen der Führungsschiene, und zwar sowohl zwischen der Platte und der Führungsschiene als auch zwischen der Führungsschiene und dem Fahrzeugdach vorgesehen sein, so daß eine außerordentlich große Bewegungsvielfalt der Plattenbewegung möglich ist.

Ein erfindungsgemäßes Fahrzeugschiebedach hat unter anderem folgende Vorteile:
- Die verschiebbare Platte ist in allen Öffnungsstellungen exakt geführt und daher äußerst geräuscharm auch bei schnellem Fahren und bei Windböen;
- es kann aus wenigen, sehr einfachen, insbesondere aus Kunststoff hergestellten Teilen gebaut sein und vergleichsweise schnell zusammenmontiert werden.

Die vorgenannten, erfindungsgemäß zu verwendenden Bauteile unterliegen in ihrer Größe, Formgestaltung, Materialauswahl und technischen Konzeptionen keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie der nachfolgenden Beschreibung der zugehörigen Zeichnung, in der eine bevorzugte Ausführungsform eines erfindungsgemäßen Fahrzeugschiebedaches dargestellt ist. In der Zeichnung zeigen:

| | |
|---|---|
| Fig. 1 | ein Fahrzeugschiebedach in Aufsicht von oben; |
| Fig. 2a bis 2c | von einem Fahrzeugschiebedach nach Fig. 1 eine schematische Seitenansicht (z.T. aufgebrochen) des Verschiebemechanismus' in drei verschiedenen Arbeitspositionen; |
| Fig. 3a | von demselben Fahrzeugschiebedach wie in Fig. 2a bis 2c einen Vertikalschnitt entlang der Linie XIIIa-XIIIa gemäß Fig. 2a; |
| Fig. 3b | von demselben Fahrzeugschiebedach wie in Fig. 2a bis 2c einen Vertikalschnitt entlang der Linie XIIIb-XIIIb gemäß Fig. 2a; |
| Fig. 4 | eine alternative Ausführungsform des Fahrzeugschiebedaches gemäß Fig. 2a bis 3b in Seitenansicht sowie |
| Fig. 5 | von demselben Fahrzeugschiebedach einen Vertikalschnitt entlang der Linie XV-XV gemäß Fig. 4. |

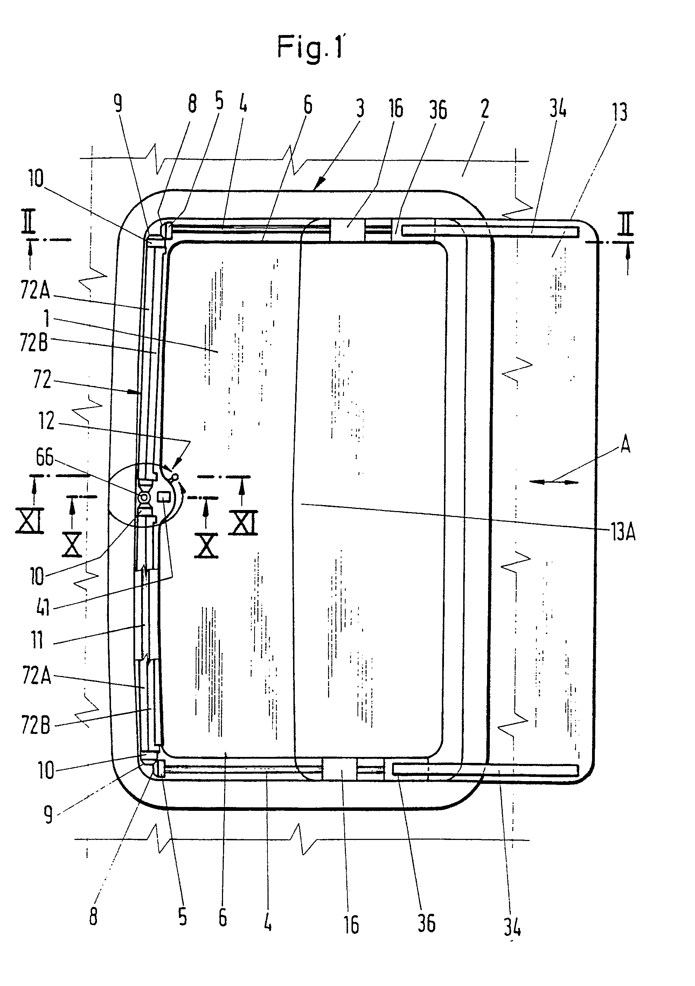

Bei einem Fahrzeugschiebedach gemäß Fig. 1 ist eine Dachöffnung 1 eines Fahrzeugdaches 2 z. B. mit einem Rahmen 3 aus Kunststoff und/oder Metall eingefaßt; der Rahmen 3 ist Bestandteil eines nachrüstbaren Fahrzeugschiebedaches, oder man verwendet einen bereits bei der Fahrzeugherstellung in das Fahrzeugdach integrierten Rahmen, der im Querschnitt, zumindest in Fahrzeuglängsrichtung bevorzugt ein L- oder U-förmiges, nach oben insbesondere offenes Profil zur möglichst vollständigen Aufnahme der zum Bewegen des Fahrzeugschiebedaches erforderlichen Bauteile aufweist. Innerhalb der in Fahrzeuglängsrichtung A weisenden Rahmenstreben 6 sind als Betätigungsorgane 4 einer in ihrer vordersten Stellung die Dachöffnung 1 verschließenden verschiebbaren Platte 13 bevorzugt je eine einstückige Antriebsspindel drehbar und axial nicht verschieblich gelagert. An der Vorderseite der Dachöffnung 1 weisen die Spindeln endseitige Kegelräder 8 auf, welche mit Kegelrädern 9 von im Rahmenvorderteil auf Lagerböcken 10 gelagerten Antriebswellen 11 kämmen. Die Antriebswellen 11 enden in der Rahmenmitte in einem an sich bekannten Kurbeltrieb 12.

Die Platte 13 ist um eine waagerechte Querachse oder ein ähnliches Halteorgan schwenkbar. Die Hinterkante der Platte 13 ist mittels des Betätigungsorganes, das auch eine Führungsstrebe mit parallel laufendem Zug und/oder Druckelement oder ein Bodenzug oder dergleichen sein kann, bevorzugt aber eine, insbesondere aus Kunststoff hergestellte Antriebsspindel mit Schneckengewinde ist, höhenverstellbar und weist hierzu ein im Einzelnen hier nicht näher dargestelltes, da nicht zum Kern dieser Erfindung gehörendes, ansich bekanntes hinteres Höhenverstellorgan auf. Das hintere Höhenverstellorgan kann die Funktion einer Hinterstütze 36 übernehmen. Plattenseitig ist ein hinteres Halteorgan vorgesehen.Ein ähnliches Halteorgan kann auch im Bereich der Vorderstütze 16, bezüglich der Deckelplatte 13 insbesondere ortsfest, vorgesehen sein.

Auch die Vorderstütze 16 kann als Höhenverstellorgan ausgebildet sein.

Die Anlenkpunkte der Platte 13 an der Vorder- und Hinterstütze können sich unmittelbar oberhalb der Antriebsspindel befinden oder auch seitlich versetzt dazu bzw. seitlich versetzt zu einem anderen Betätigungsorgan angeordnet sein.

Die Vorderstütze 16 weist eine in der Zeichnung nicht näher dargestellte Gewindehülse innerhalb einer entsprechenden Durchbrechung auf, durch die beim Drehen der Spindel die Vorderstütze 16 in Fahrzeuglängsrichtung A bewegt wird. Die Vorderstütze 16 ist insbesondere dann als vorderes Höhenverstellorgan ausgebildet, wenn zu Beginn des Öffnungsweges der Platte 13 eine Druckentlastung von einer etwa zwischen dem Rahmen 3 und der Platte 13 vorgesehenen Dichtung erforderlich oder gewünscht ist. Die Höhenverstellung braucht daher nur einige Millimeter, z. B. 5 bis 10 mm zu betragen.

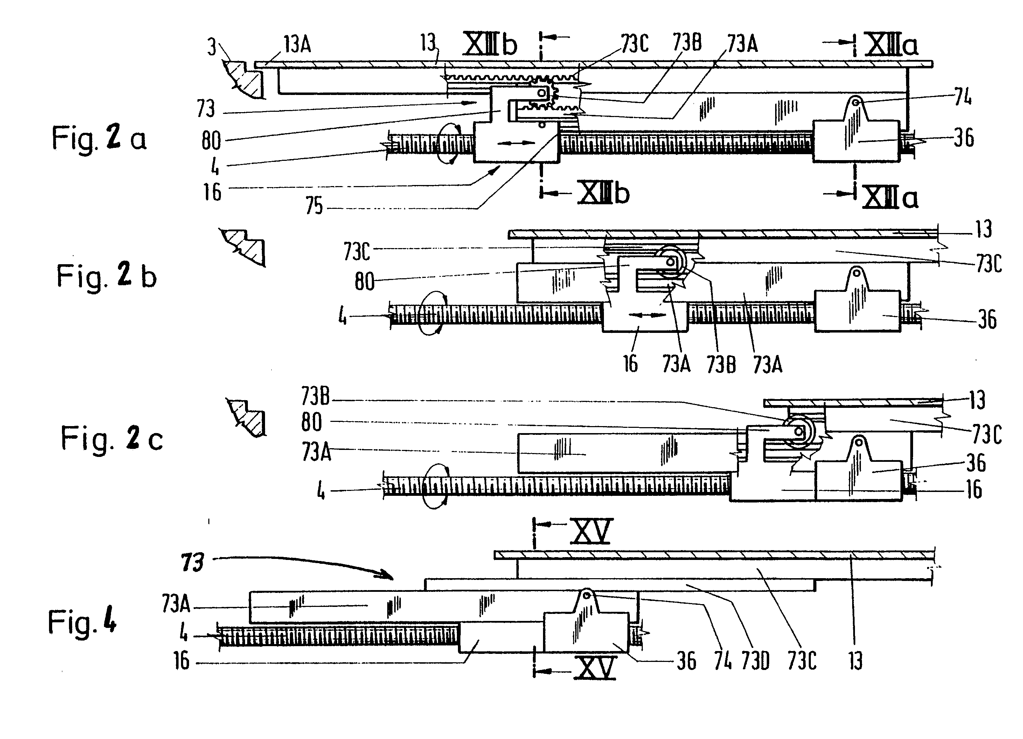

Die Vorderstütze 16 der Platte 13 ist regelmäßig ein gewisses Stück hinter der Vorderkante 13A angeordnet. Dies hat zur Folge, daß die Platte 13 bei einer Spoilerdachanordnung die Dachöffnung nur teilweise freigeben kann. Zur Vermeidung dieses Nachteiles wird ein Übersetzungsgetriebe 73 vorgesehen, das zwischen der Platte 13 einerseits und der Vorder- und Hinterstütze 16 und 36 andererseits angeordnet ist (Figuren 2a bis 5). Das Übersetzungsgetriebe besteht aus einer am Rahmen des Fahrzeugschiebedaches ortsfest festlegbaren ersten Schiene 73A, einer mit der Platte 13 fest verbindbaren zweiten Schiene 73C sowie einem von der Vorderstütze 16 in Verschieberichtung A (Fahrzeuglängsrichtung) vor- und zurückbewegbaren Antriebsrad 73B, das zwischen der ersten Schiene 73A und der zweiten Schiene 73C derart angeordnet ist, daß es an beiden Schienen durch Kraft- oder Formschluß abrollen kann. Durch das Abrollen des Antriebsrades 73B auf der rahmenseitigen Schiene 73A wird die plattenseitige Schiene 73C doppelt so schnell vor- bzw. zurückbewegt wie das Antriebsrad 73B selbst, sofern die Abrollfläche des Antriebsrades bezüglich der rahmenseitigen Schiene 73B auf dem gleichen Durchmesser liegt, wie die Abrollfläche für die plattenseitige Schiene 73C. Dies ist im Ausführungsbeispiel gemäß Fig. 2a bis 3b der Fall. Zur Stabilitätserhöhung der Verbindung zwischen der Platte 13 und dem Rahmen 3 bei völlig nach hinten geschobener Platte (die in Fig. 2c und Fig. 4 dargestellte Position) kann eine Zwischenschiene 73D gleitend zwischen der rahmenseitigen Schiene 73A und der plattenseitigen Schiene 73C in ähnlicher Weise vorgesehen sein, wie dies von 100 %ig herausziehbaren Schubladen von Möbeln bekannt ist.

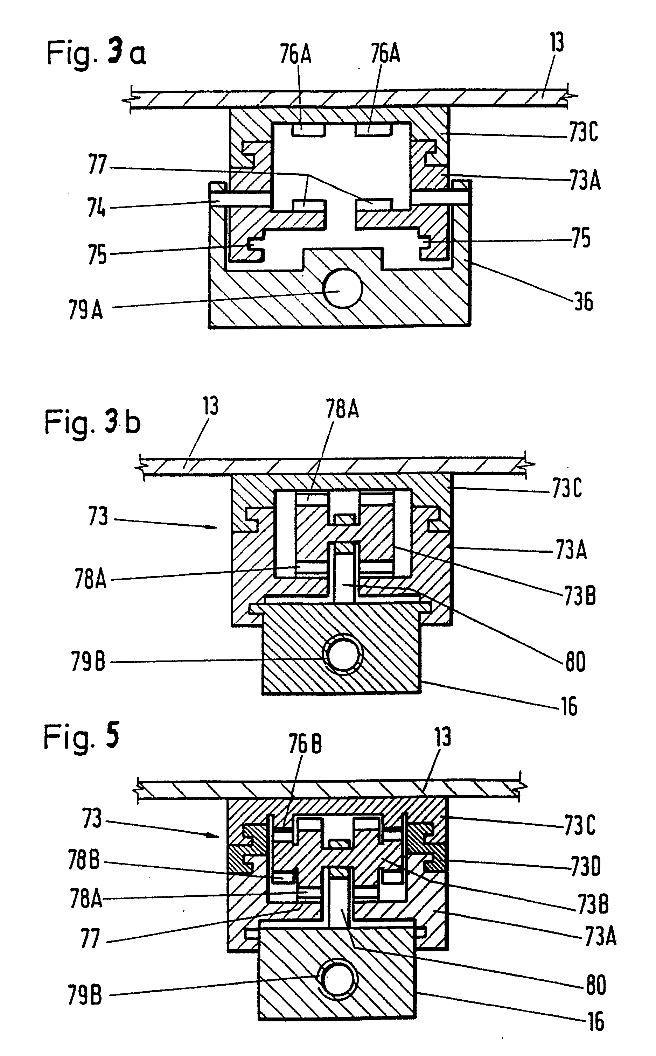

Wenn die Übersetzung kleiner als 2 : 1 ist, kann die Vorderstütze bei geschlossenem Fahrzeugschiebedach vorteilhafterweise relativ weit vorne angeordnet sein, ohne auf den gewünschten Effekt des möglichst weiten Öffnens des Fahrzeugschiebedaches verzichten zu müssen. Hierzu weist das Antriebsrad 73B verschieden große Abrollradien auf, wobei der größere Abrollradius auf der rahmenseitigen Schiene 73A und der kleinere Abrollradius auf der plattenseitigen Schiene 73C abrollt (siehe Fig. 5).

Sowohl die Vorderstütze 16 als auch die Hinterstütze 36 können Höhenverstellorgane aufweisen, wie sie im Zusammenhang mit der Fig. 1 beschrieben wurde. Ebenfalls ist es möglich, die rahmenseitige Schiene 73A bezüglich des Fahrzeugdaches verschiebbar anzuordnen und mit Arretiermitteln zu versehen, so daß das Übersetzungsgetriebe 73 erst dann wirksam wird, wenn die rahmenseitige Schiene 73A in eine ortsfeste Position gelangt. Das gleiche gilt bezüglich der Befestigung zwischen der Platte 13 und der plattenseitigen Schiene 73C.

Bei den in Fig. 2a bis 5 dargestellten Ausführungsformen ist die rahmenseitige Schiene 73A bezüglich der Hinterstütze 36 mittels einer Schwenkwelle 74 schwenkbar gelagert und im Bereich seiner Abrollfläche für das Antriebsrad 73B als in der Längsmitte unterbrochene Zahnstange 77 ausgebildet. Zwischen den beiden Zahnstangenbereichen erstreckt sich ein an der Vorderstütze 16 befestigter Haltearm 80 für das Antriebsrad 73B, das zweischeibig ausgeführt ist und mit seinen Zahnkränzen 78A formschlüssig mit den Zahnstangen 77 kämmt. Die Vorderstütze 16 kann in Führungsnuten 75 der rahmenseitigen Schiene 73A geführt sein. Die plattenseitige Schiene 73C ist mittels bekannter Führungselemente bezüglich der rahmenseitigen Schiene 73A verschiebbar angeordnet und weist Zahnstangen 76A auf, die mit den Zahnkränzen 78A des Antriebsrades 73B kämmen (Fig. 3a/b) Bei der in Fig. 4 und 5 dargestellten Ausführungsform mit vergleichsweise kleinerem Übersetzungsverhältnis weist die plattenseitige Schiene 73C zwei Zahnstangen 76B auf, mit denen die Zahnkränze 78B des Antriebsrades 73B kämmen. In diesem Fall sind einerseits die rahmenseitige Schiene 73A und die Zwischenschiene 73D und andererseits die Zwischenschiene 73D und die plattenseitige Schiene 73C zueinander gleitverschieblich geführt. Die durch Drehen der Antriebsspindel 4 vor- und zurückschiebbare Vorderstütze 16 weist ein mit der Antriesspindel 4 kämmendes Schneckengewinde 79B auf. Demgegenüber weist die Hinterstütze 36 ein Lager 79A in Form einer Bohrung auf, deren Innendurchmesser dem äußeren Durchmesser der Antriebsspindel 4 entspricht, so daß sich die Antriebsspindel 4 darin frei drehen kann.

## Bezugszeichenliste

| 1 | Dachöffnung | 78A | Zahnkranz |
|---|---|---|---|
| 2 | Fahrzeugdach | 78B | Zahnkranz |
| 3 | Rahmen | 79A | Lager |
| 4 | Betätigungsorgan | 79B | Schneckengewinde |
|   | (Antriebsspindel) | 80 | Haltearm |
| 5 | Lagerbock | | |
| 6 | Rahmenstrebe | | |
| 7 | Rahmenstrebe | A | Fahrzeuglängsrichtung |
| 8 | Kegelräder | | |
| 9 | Kegelräder | | |
| 10 | Lagerböcke | | |
| 11 | Antriebswellen | | |
| 12 | Kurbeltrieb | | |
| 13 | Platte | | |
| 13A | Vorderkante | | |
| 14 | Vorderkante | | |
| 15 | Querachse | | |
| 16 | Vorderstütze | | |
|   | (vorderes Höhenverstellorgan) | | |
| 17 | Halteorgan (hinteres) | | |
| 17' | Halteorgan (vorderes) | | |
| 73 | Übersetzungsgetriebe | | |
| 73A | erste Schiene | | |
| 73B | Antriebsrad | | |
| 73C | zweite Schiene | | |
| 73D | Zwischenschiene | | |
| 74 | Schwenkwelle | | |
| 75 | Führungsnut | | |
| 76A | Zahnstange | | |
| 76B | Zahnstange | | |
| 77 | Zahnstange | | |

## Patentansprüche

1. Fahrzeugschiebedach, zumindest bestehend aus einer Platte mit einer Vorderkante und einer Hinterkante, einer Öffnung im Fahrzeugdach, einer Führungsschiene, mindestens einem Höhenverstellorgan und einem Betätigungsorgan, wobei die Platte
   - in einer ersten Stellung die Öffnung (1) im Fahrzeugdach (2) verschließt,
   - mittels des Höhenverstellorganes höhenverstellbar ist,

- außerhalb der Dachöffnung (1) in verschiedene Stellungen auf einer Seite des Fahrzeugdaches (2) verschiebbar ist,
- in Längsrichtung (A) des Fahrzeuges entlang der Führungsschiene vor- und zurückbewegbar ist und
- mittels des mindestens einen Betätigungsorganes zumindest verschiebbar ist, **gekennzeichnet durch** ein zwischen der Platte (13) einerseits und dem Fahrzeugdach, insbesondere einer Vorder- und Hinterstütze (16 und 36), andererseits angeordnetes Übersetzungsgetriebe (73).

2. Fahrzeugschiebedach nach Anspruch 1, dadurch gekennzeichnet, daß das Übersetzungsgetriebe (73) ein, insbesondere von der Vorderstütze (16), in Verschieberichtung (A) der Platte (13) vor- und zurückbewegbaren und auf einer bezüglich des Fahrzeugdaches, insbesondere ortsfest, festlegbaren oder festgelegten ersten Schiene (73A) einerseits und einer mit der Platte (13) fest verbindbaren oder verbundenen zweiten Schiene (73C) andererseits abrollbaren Antriebsrad (73B) aufweist.

3. Fahrzeugschiebedach nach Anspruch 1 oder 2, dadurch gekennzeichnet, daß das Übersetzungsverhältnis des Übersetzungsgetriebes (73) kleiner als 2 : 1 ist.

4. Fahrzeugschiebedach nach Anspruch 2 oder 3, dadurch gekennzeichnet, daß das Antriebsrad (73B) zwischen der ersten Schiene (73A) und der zweiten Schiene (73C) derart angeordnet ist, daß es an beiden Schienen durch Kraft- oder Formschluß abrollen kann.

5. Fahrzeugschiebedach nach einem der Ansprüche 1 bis 4, gekennzeichnet durch eine, insbesondere gleitend, zwischen der rahmenseitigen Schiene (73A) und der plattenseitigen Schiene (73C) geführte Zwischenschiene (73D)

6. Fahrzeugdach nach einem der Ansprüche 2 bis 5, dadurch gekennzeichnet, daß das Antriebsrad (73B) für die rahmenseitige Schiene (73A) einerseits und für die plattenseitige Schiene (73C) andererseits verschieden große Abrollradien aufweist, wobei, vorzugsweise, der bezüglich der plattenseitigen Schiene (73C) wirksame Abrollradius der kleinere und der bezüglich der rahmenseitigen Schiene (73A) wirksame Abrollradius der größere ist.

7. Fahrzeugschiebedach nach einem der Ansprüche 1 bis 6, dadurch gekennzeichnet, daß mindestens ein Höhenverstellorgan für die Höhenverstellung der Hinterkante der Platte (13) oder mindestens ein Höhenverstellorgan für die Höhenverstellung der Vorderkante der Platte (13) oder mindestens Je ein Höhenverstellorgan für die Höhenverstellung der Vorderkante und für die Höhenverstellung der Hinterkante der Platte (13) vorgesehen ist, wobei das/die Höhenverstellorgan/e vorzugsweise an der Vorderstütze (16) bzw. an der Hinterstütze (36) der Platte (13) vorgesehen ist/sind.

8. Fahrzeugschiebedach nach einem der Ansprüche 2 bis 7, dadurch gekennzeichnet, daß die rahmenseitige Schiene (73A) bezüglich des Fahrzeugdaches verschiebbar ist und, vorzugsweise, mit Arretiermitteln derart versehen ist, daß das Übersetzungsgetriebe (73) erst dann wirksam wird, wenn die rahmenseitige Schiene (73A) in eine ortsfeste Position gelangt.

9. Fahrzeugschiebedach nach einem der Ansprüche 2 bis 8, dadurch gekennzeichnet, daß die plattenseitige Schiene (73C) bezüglich der Platte (13) verschiebbar ist und, vorzugsweise, mit Arretiermitteln derart versehen ist, daß das Übersetzungsgetriebe (73) erst dann wirksam wird, wenn die plattenseitige Schiene (73C) in eine plattenfeste Position gelangt.

10. Fahrzeugschiebedach nach einem der Ansprüche 2 bis 9, dadurch gekennzeichnet, daß die rahmenseitige Schiene (73A) bezüglich der Hinterstütze (36) und/oder der Vorderstütze (16) schwenkbar gelagert ist.

11. Fahrzeugschiebedach nach einem der Ansprüche 2 bis 10, dadurch gekennzeichnet, daß die plattenseitige Schiene (73C) oder die rahmenseitige Schiene (73A) oder beide Schienen zumindest im Bereich ihrer Abrollflächen für das Antriebsrad (73B) als Zahnstangen (76A, 76B, 77) ausgestaltet ist/sind.

12. Fahrzeugschiebedach nach einem der Ansprüche 2 bis 11, dadurch gekennzeichnet, daß das Antriebsrad (73B) mindestens ein Paar von parallel und mit seitlich Abstand zueinander angeordneten Abrollflä-

EP 0 437 283 A1

chen (Zahnkränze 78A; 78B) aufweist und die zugeordneten Abrollflächen (Zahnstangen 76A; 76B) in entsprechender Weise paarweise vorgesehen und angeordnet sind.

13. Fahrzeugschiebedach nach einem der Ansprüche 2 bis 12, gekennzeichnet durch einen an der Vorderstütze (16) befestigten Haltearm (80) für das Antriebsrad (73B)

14. Fahrzeugschiebedach nach einem der Ansprüche 2 bis 13, gekennzeichnet durch zwischen der Vorstütze (16) und der rahmenseitigen Schiene (73A) wirksame Führungen (Führungsnuten 75).

15. Fahrzeugschiebedach nach einem der Ansprüche 2 bis 14, dadurch gekennzeichnet, daß die Schienen (73A, 73C, 73B) in Richtung ihrer Relativverlagerung mit miteinander korrespondierenden Führungselementen versehen sind.

16. Fahrzeugschiebedach nach einem der Ansprüche 1 bis 15, dadurch gekennzeichnet, daß die Platte (13) mittels einer Antriebsspindel (4) insbesondere mit außenliegendem Schneckengewinde, im Verschiebesinne antreibbar ist und die Antriebsspindel, vorzugsweise, gleichzeitig als Führungsschiene für die Platte (13) dient, wobei, weiterhin vorzugsweise, die Vorderstütze (16) von der Antriebsspindel (4) vor- und zurückverlagerbar ist.

7

# Fig.1

Fig. 2 a

Fig. 2 b

Fig. 2 c

Fig. 4

EP 0 437 283 A1

Fig. 3a

Fig. 3.b

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-B-1 262 135   (BRÜSSOW)<br>* Spalte 3, Zeilen 29 - 44 * * Spalte 4, Zeilen 6 - 20; Figuren 1, 4, 5 *<br>— — — | 1,9,11 | B 60 J<br>7/057<br>B 60 J 7/043<br>F 16 H 19/00 |
| A | FR-A-2 503 059   (RENAULT)<br>* Seite 2, Zeilen 15 - 35; Figuren 1-4 *<br>— — — | 1 | |
| P,A | EP-A-0 185 993   (BAYERISCHE MOTOREN WERKE)<br>* Seite 4, Zeile 10 - Seite 5, Zeile 37; Figuren 1-8 *<br>— — — | 1,6 | |
| D,A | DE-A-3 404 541   (FARMONT)<br>* Seite 12, Zeilen 14 - 30; Figuren 4a, 4b, 5 *<br>— — — — — | 1,7 | |

| RECHERCHIERTE SACHGEBIETE (Int. Cl.5) |
|---|
| B 60 J<br>F 16 H |

Der vorliegende Recherchenbericht wurde für alle Patentansprüche erstellt

| Recherchenort | Abschlußdatum der Recherche | Prüfer |
|---|---|---|
| Den Haag | 19 April 91 | AYITER I. |